# EUROPEAN PATENT APPLICATION

(11) **EP 3 451 777 A1**
(43) Date of publication of application: **06.03.2019**
(21) Application number: 17789704.8
(22) Date of filing: 28.04.2017
(51) Int. Cl.: H04W 72/12, H04W 8/00, H04W 72/04

(54) **USER TERMINAL AND WIRELESS COMMUNICATION METHOD**

(30) Priority: 28.04.2016 JP 2016091306
(71) Applicant: NTT DOCOMO, INC., Chiyoda-ku Tokyo 100-6150 (JP)
(72) Inventor: KISHIYAMA, Yoshihisa, Tokyo 100-6150 (JP); TAKEDA, Kazuki, Tokyo 100-6150 (JP)
(74) Representative: Hoffmann Eitle
(86) International application number: PCT/JP2017/016875
(87) International publication number: WO 2017/188423

(57) **Abstract**

The present invention is designed so that, even when UL and DL are controlled dynamically, it is possible to reduce interference adequately, and prevent the spectral efficiency from dropping significantly. A user terminal, which communicates with a radio base station, has a receiving section that receives downlink control information, and a control section that controls communication by switching between UL transmission and DL transmission per subframe and/or within a subframe based on the downlink control information, and the control section performs the UL transmission using a frequency band that is narrower than a frequency band used for the DL transmission.

## Description

### Technical Field

The present invention relates to a user terminal, a radio base station and a radio communication method in a next-generation mobile communication system.

### Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "5G (5th generation mobile communication system)," "New-RAT (Radio Access Technology)" and so on) are also under study for the purpose of achieving further broadbandization and increased speed beyond LTE.

Existing LTE systems use control based on TDD (Time Division Duplex) and FDD (Frequency Division Duplex). For example, in TDD, whether each subframe is used in the uplink ("UL") or in the downlink ("DL") is determined strictly based on UL/DL configurations.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

Generally, the UL-DL traffic ratio is not always constant, and changes over time or depending on locations. For this reason, radio communication systems that use TDD are expected to use radio resources efficiently, by dynamically changing the UL/DL resource format in a given cell (a transmission point, a radio base station, etc.) in accordance with the variation of traffic.

Now, for radio communication systems such as LTE Rel. 13 and later versions (for example, 5G), radio frames (also referred to as "lean radio frames") to provide good future scalability and excellent power saving performance are under study. Unlike existing LTE systems, in which predetermined UL/DL configurations are used, regarding these radio frames, studies are in progress to make it possible to change the direction of communication such as UL and DL, dynamically, except for certain subframes (this scheme is also referred to as "highly flexible dynamic TDD").

However, when transmission points (for example, different operators) that use adjacent frequency bands run dynamic TDD separately, cases might occur where the direction of communication varies between the transmission points at a given timing (for example, in a given TTI). In this case, severe interference is produced between UL and DL, and the quality of communication might deteriorate. Meanwhile, it may be possible to configure a large guard band between frequency bands used as system bands in individual transmission points, in order to mitigate the interference between UL and DL. However, in this case, the system bandwidths used for UL and DL communication become narrower, and there is a risk that the spectral efficiency will drop significantly.

The present invention has been made in view of the above, and it is therefore an object of the present invention to provide a user terminal and a radio communication method, whereby it is possible to reduce interference adequately, and whereby, furthermore, it is possible to prevent the spectral efficiency from dropping significantly, even when UL/DL is controlled dynamically.

### Solution to Problem

According to one aspect of the present invention, a user terminal has a receiving section that receives downlink control information, and a control section that controls communication by switching between UL transmission and DL transmission per subframe and/or within a subframe based on the downlink control information, and the control section performs the UL transmission using a frequency band that is narrower than a frequency band used for the DL transmission.

### Advantageous Effects of Invention

According to the present invention, even when UL/DL is controlled dynamically, interference can be reduced adequately, and spectral efficiency can be prevented from dropping significantly.

### Brief Description of Drawings

FIG. 1 is a diagram to show an example of the structure of lean radio frames;
FIG. 2 is a diagram to explain the roles of a downlink control channel in different types of subframes;
FIG. 3 is a diagram to show an example of a case where dynamic TDD is run in synchronous operation among different operators;
FIG. 4 is a diagram to show an example of a case where dynamic TDD is run in asynchronous operation among different operators;
FIG. 5 is a diagram to show an example of a case where the frequency bandwidth for performing UL communication is configured narrower than the frequency bandwidth for DL communication;
FIG. 6 is a diagram to show an example of a method of configuring asymmetric bandwidths in UL and DL;
FIG. 7 is a diagram to show another example of a method of configuring asymmetric bandwidths in UL and DL;
FIG. 8 is a diagram to show another example of a method of configuring asymmetric bandwidths in UL and DL;
FIG. 9 is a diagram to show another example of a method of configuring asymmetric bandwidths in UL and DL;
FIGs. 10A and 10B are diagrams to show examples of self-contained TTIs;
FIG. 11 is a diagram to explain the UL transmission power control that is applied when self-contained TTIs are used;
FIG. 12 is a diagram to explain the UL transmission power control that is applied when self-contained TTIs are used;
FIG. 13 is a diagram to show an example of a schematic structure of a radio communication system according to one embodiment of the present invention;
FIG. 14 is a diagram to show an example of an overall structure of a radio base station according to one embodiment of the present invention;
FIG. 15 is a diagram to show an example of a functional structure of a radio base station according to one embodiment of the present invention;
FIG. 16 is a diagram to show an example of an overall structure of a user terminal according to one embodiment of the present invention;
FIG. 17 is a diagram to show an example of a functional structure of a user terminal according to one embodiment of the present invention; and
FIG. 18 is a diagram to show an example of a hardware structure of a radio base station and a user terminal according to one embodiment of the present invention.

### Description of Embodiments

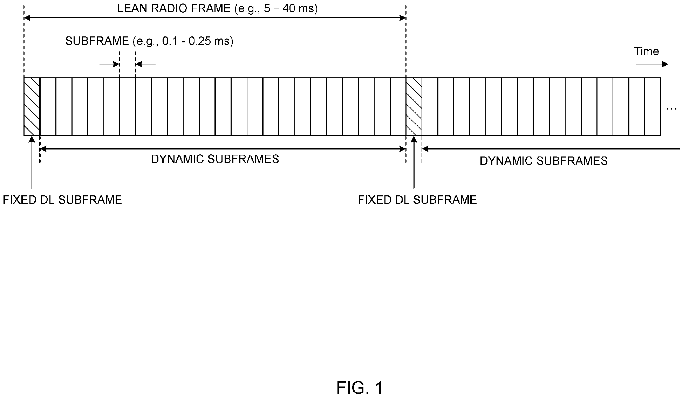

Now, referring to FIG. 1, an example of a communication method using a radio frame format (for example, lean radio frames) for future radio communication systems of LTE Rel. 13 and later versions (for example, 5G) will be described. FIG. 1 is a diagram to show an example of the structure of lean radio frames. As shown in FIG. 1, lean radio frames have a predetermined time duration (for example, five to forty ms). A lean radio frame is comprised of a plurality of subframes, where each subframe has a predetermined time duration (for example, 0.125 ms, 0.25 ms, 1 ms, etc.).

Subframes in lean radio frames can be configured to have a shorter time duration than the subframes of existing LTE systems (LTE Rel. 8 to 12). As a result of this, subframes in lean radio frames can be transmitted and received in a short time compared to existing LTE systems. Furthermore, a subframe may be referred to as a "transmission time interval (TTI)." Subframes in lean radio frames can be made shorter than the subframes of existing LTE systems (LTE Rel. 8 to 12) (one ms). In this case, subframes in lean radio frames may be referred to as "short TTIs," "short subframes," and so on. Meanwhile, subframes in lean radio frames can be the same length (one ms) as the subframes of existing LTE systems (LTE Rel. 8 to 12). In this case, subframes in lean radio frames may be referred to as "LTE subframes," "normal TTIs," "long TTIs," and so on.

As shown in FIG. 1, lean radio frames can be configured in a format in which some of the subframes are determined, in advance, as being subframes for DL communication (DL subframes). These DL subframes are subframes in which the direction of communication is determined in advance, and therefore referred to as "fixed subframes," "fixed DL subframes" and so on. These fixed DL subframes can be configured in a predetermined cycle (for example, in a cycle of five ms or more).

FIG. 1 shows a case where a fixed DL subframe is provided at the head of a lean radio frame. Note that the format of the lean radio frame and the number and positions of fixed DL subframes in the lean radio frame are not limited to those shown in FIG. 1. Multiple fixed DL subframes may be configured in a lean radio frame.

When multiple DL subframes are configured, fixed DL subframes may be mapped so as to concentrate at a specific time within a lean radio frame (for example, in a specific period of two ms within a cycle of ten ms), so that it is possible to make the cycle of fixed DL subframes longer, and reduce energy consumption in, for example, radio base stations and user terminals that perform transmission/receipt using fixed DL subframes. Meanwhile, by mapping fixed DL subframes so as to be distributed within a lean radio frame, it is possible to make the cycle of fixed DL subframes shorter, which can, for example, make it easier to build quality connections with user terminals that move at high speeds.

The locations and the cycle of time resources for fixed DL subframes may be selected by a radio base station from a plurality of combinations that are prepared in advance, and a possible combination may be detected by a user terminal on a blind basis, or the locations and the cycle of time resources for fixed DL subframes may be reported from the radio base station to the user terminal via broadcast signals, RRC signaling and so on.

Meanwhile, lean radio frames can be configured so that the direction of communication in subframes other than fixed DL subframe can be changed dynamically. Since the direction of communication is changed dynamically in these subframes, these subframes are also referred to as "flexible subframes," "dynamically-utilized subframes," "dynamic subframes," and so on. Furthermore, dynamic subframes might make it possible to change the direction of communication such as UL or DL dynamically (this scheme is also referred to as "highly flexible dynamic TDD").

The direction of communication (or the UL/DL configuration) in dynamic subframes may be specified by fixed DL subframes (semi-dynamic assignment), or may be specified by downlink control information (also referred to as a "DL control channel," an "L1/L2 control signal," an "L1/L2 control channel," etc.) provided in each dynamic subframe (dynamic assignment). That is, the direction of communication in dynamic subframes may be changed per radio frame, which is comprised of a plurality of subframes, or may be changed per subframe.

Thus, to change the direction of communication in subframes dynamically within a lean radio frame, dynamic changes in subframe units are by no means limiting, and semi-dynamic changes in units of radio frames, which are comprised of multiple subframes, may be included as well.

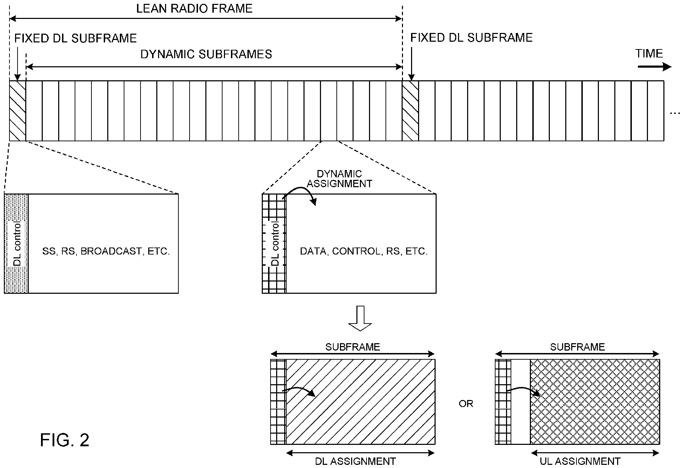

FIG. 2 is a diagram to show examples of the structures of fixed DL subframes and dynamic subframes. Here, a case is shown in which fixed DL subframes are configured in a given cycle, and multiple dynamic subframes are configured between fixed DL subframes. Note that the structures of fixed DL subframes and dynamic subframes shown in FIG. 2 are simply examples, and those shown in FIG. 2 are by no means limiting.

In a dynamic subframe, for example, at least one of DL data, UL data, the DL sounding reference signal (also referred to as the "CSI measurement reference signal," the "CSI-RS," etc.), the UL sounding reference signal (also referred to as the "SRS"), uplink control information (UCI) and a random access preamble is transmitted and/or received. Meanwhile, fixed DL subframes are configured so that at least one of cell discovery (detection), synchronization, measurements (for example, RRM (Radio Resource Management) measurements including RSRP (Reference Signal Received Power) measurements), mobility control and initial access control takes place.

In this case, it is possible that the signal transmission and/or receiving processes (scheduling) in dynamic subframes and fixed DL subframes are performed using downlink control channels provided in each subframe. For example, in dynamic subframes, assignment of DL transmission (DL assignment) or assignment of uplink transmission (UL assignment) is indicated to a user terminal by downlink control information (or a downlink control channel) that is transmitted in each subframe.

Furthermore, assignment may be performed so that transmission/receipt control (scheduling) is completed within dynamic subframes, in order to enable short-time communication. This type of assignment is also referred to as "self-contained assignment." Subframes, in which self-contained assignment is performed, may be referred to as "self-containment subframes." Self-contained subframes may be referred to as "self-contained TTIs" or "self-contained symbol sets," or other names may be applied as well.

In self-contained subframes, a user terminal may receive a DL signal based on downlink control information, and also transmit a feedback signal (for example, an HARQ-ACK and/or the like) in response to that DL signal. Furthermore, the user terminal may transmit a UL signal based on downlink control information, and also receive a feedback signal in response to that UL signal. The use of self-contained subframes can realize feedback with ultra-low delay of one ms or less, for example, so that the latency can be reduced. In this case, the radio base station and the user terminal can control communication by switching between the uplink and the downlink within subframes (or TTIs).

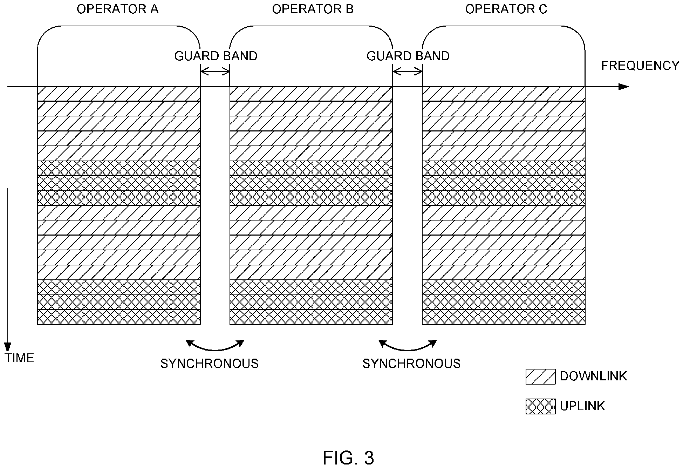

Now, in existing LTE systems, when multiple operators run TDD using adjacent bands, the operators have to run TDD by synchronizing with each so as to reduce the impact of interference between the uplink and the downlink, and by assigning the uplink and the downlink at the same ratio (see FIG. 3). FIG. 3 shows an example of a case where three operators A to C run TDD using adjacent bands.

In this case, the UL/DL configurations are applied synchronously among operators A to C that employ TDD, so that the direction of communication can be aligned in each subframe. This will reduce the interference between the uplink and the downlink between operators (for example, between operator A and operator B, and between operator B and operator C).

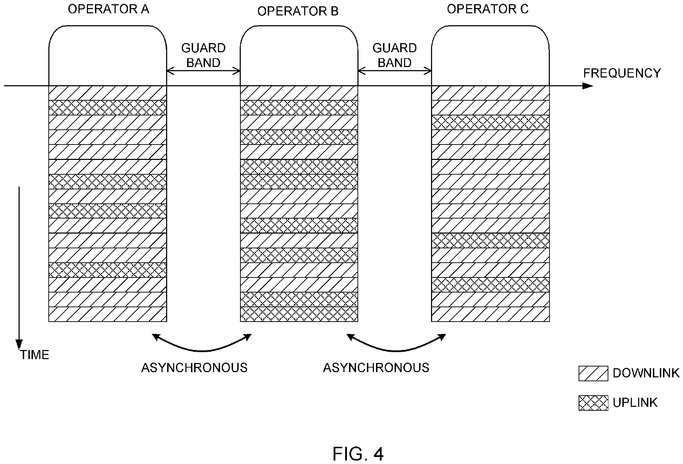

On the other hand, when each operator runs dynamic TDD freely (asynchronous operation), interference between the uplink and the downlink is produced in subframes in which the direction of communication differs between operators. In this case, to reduce the interference between the uplink and the downlink between operators, it may be possible to provide a larger guard band (GP) between the system bands (frequency bands) used by each operator (see FIG. 4).

However, if the guard band configured between operators is made larger, there is a possibility that the system bandwidths to use for communication will be narrower (less available), and the spectral efficiency will drop significantly. As a result of this, the problem arises that the UL communication and DL communication data rates decrease.

Therefore, when UL communication and DL communication are switched on a per operator basis and controlled independently (for example, dynamic TDD), the problem is how to reduce the interference between the uplink and the downlink, and how to prevent a significant decrease in spectral efficiency (for example, as shown in FIG. 4).

The present inventors have focused on the fact that interference is produced between the uplink and the downlink when the uplink and the downlink overlap between operators (or cells) that use adjacent frequency bands, and come up with the idea of adopting a structure which, in this case, configures the guard band (GP) to be large, selectively, between operators (or cells) that perform UL communication and DL communication. This can reduce the interference between the uplink and the downlink, and, furthermore, reduce the decrease in spectral efficiency, compared with the case of narrowing the system bandwidths used for UL communication and DL communication (see, for example, FIG. 4).

For example, according to one aspect of the present embodiment, in a system that uses a TDD scheme, in which each operator (or each cell) flexibly switches between and runs the uplink and the downlink per TTI or within TTIs, one frequency bandwidth (for example, the uplink) is configured narrower than the other frequency bandwidth (for example, the downlink).

Now, the present embodiment will be described below in detail with reference to the accompanying drawings. The present embodiment is not limited to operators that use different frequency bands, and can be applied between cells that use different frequency bands. Also, the present embodiment can be applied to systems that use communication schemes in which UL communication and DL communication might overlap each other at a given timing.

Furthermore, although cases will be shown in the following description where the frequency bandwidth of the uplink is configured narrow compared to the downlink, the present embodiment can be applied likewise to the case where the downlink frequency bandwidth is configured narrow compared to the uplink. Also, the present embodiment may be configured to be applied only to UL communication in given subframes (or TTIs).

That is, in the following embodiments, a subframe (TTI) may be a subframe (one ms) in existing LTE, may be a shorter period than one ms (for example, one to thirteen symbols), or may be a longer period than one ms.

### (First Aspect)

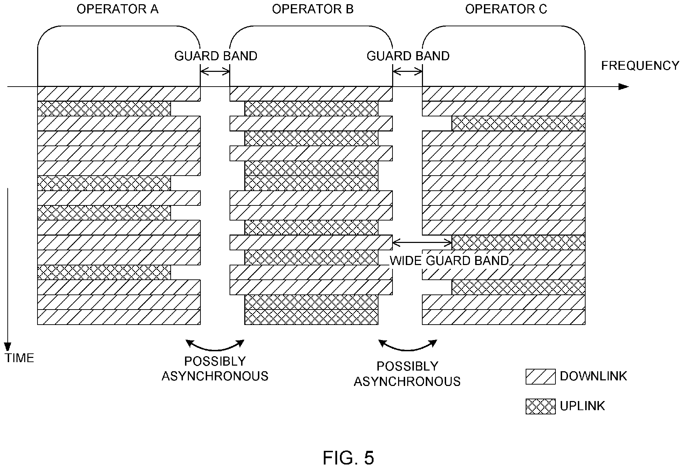

FIG. 5 shows an example of a case where the frequency bandwidth of the uplink is configured narrow compared to the downlink, in a system that uses a TDD scheme, in which the uplink and the downlink are flexibly switched and run per neighboring operator (or cell). In addition, FIG. 5 shows a case where operators A to C, using adjacent frequency bands, each employ dynamic TDD, independently, and perform asynchronous operation.

Referring to FIG. 5, when, in a given TTI (or within a given TTI), different operators (for example, operators A to C) each perform DL communication, a radio base station and a user terminal can communicate using a frequency bandwidth that is configured wide (the guard band has a narrow bandwidth). In this case, it is possible to perform DL communication using a wide frequency bandwidth, as in systems that are run by synchronizing the UL/DL configurations. When each operator (or cell) performs DL communication, interference is not produced between the uplink and the downlink even when the guard band is narrow.

When DL communication and UL communication are performed by different operators in a given TTI (or within a given TTI), the operator (or cell) making DL communication communicates in a frequency bandwidth that is configured wide, and the operator making UL communication communicates in a frequency band that is configured to be narrower than the DL.

Thus, according to the present embodiment, the guard band in DL communication is designed assuming synchronous operation in existing systems, and, by narrowing the frequency bandwidth only when UL communication is performed, the guard band between operators (or cells) is configured wide. This can reduce the interference between the uplink and the downlink even when dynamic TDD is run in asynchronous operation among operators (or cells). Also, by configuring the frequency bandwidth narrow only in one communication direction (for example, UL communication), it is possible to spare a large decrease in spectral efficiency.

Although a case has been shown with reference to FIG. 5 where all UL communication bandwidths are configured narrow, the present embodiment is by no means limited to this. A structure may be adopted here in which the UL bandwidth is configured narrow only in some frequency bands. Alternatively, a structure may be adopted, in which the UL bandwidth is configured narrow only in predetermined TTIs within the same frequency band. For example, a structure may be adopted here in which, when a given TTI is configured as a UL-specific TTI in each operator (or each cell), the UL communication in this TTI is performed by using a wider bandwidth than in the UL communication in other TTIs (for example, using the same bandwidth used for DL communication).

The frequency bands to be configured for DL communication and UL communication may be defined in advance by the specification, or may be configured and changed as appropriate per operator (or cell) and/or per user terminal. Assuming the case where the frequency bandwidths to configure in DL communication and UL communication are configured to be changed as appropriate, an example of the method of configuring different frequency bandwidths (asymmetric bandwidths) between DL communication and UL communication will be shown below. Note that the method of configuring different frequency bands for DL communication and UL communication is not limited to the examples described below.

### <Method 1 of configuring asymmetric bandwidths>

As an example of the method of configuring asymmetric bandwidths, in carrier aggregation (CA) in which multiple component carriers (CCs) to adopt TDD are configured, it is possible to configure the numbers of carriers (the number of CCs) different between the uplink and the downlink.

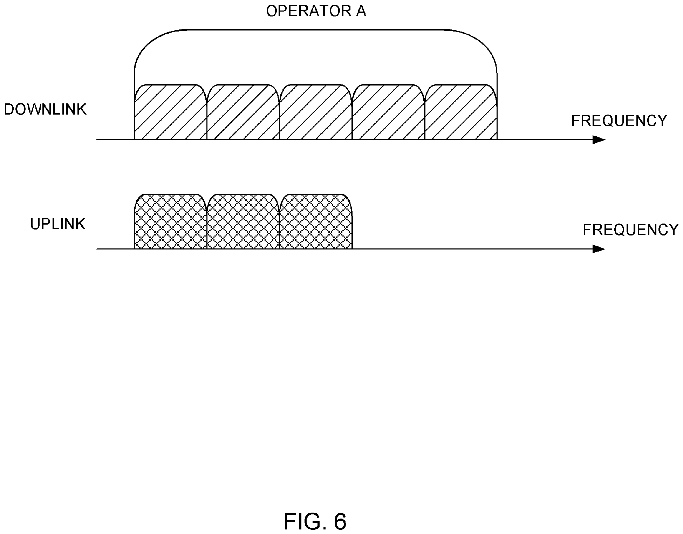

FIG. 6 shows a case where each operator (or cell) configures few CCs for UL communication, compared to the CCs for DL communication. In the case shown here, in operator A (or cell A), the number of CCs for DL communication is configured to five, and the number of CCs for UL communication is configured to be less than five (three, in this case). In this case, when a radio base station and a user terminal communicate by switching between DL communication and the UL communication dynamically, per TTI or within TTIs, the radio base station and the user terminal controlled communication by using asymmetric numbers of CCs between the uplink and the downlink.

As shown in FIG. 6, the number of carriers in CA (the number of CCs) is configured so as to be different between the uplink and the downlink, and, this configuration of the number of CCs makes it easy to configure the bandwidth for the uplink narrower than the downlink.

### <Method 2 of Configuring Asymmetric Bandwidths>

As another example of the method of configuring asymmetric bandwidths, in carrier aggregation (CA), in which multiple component carriers (CC) to adopt TDD are configured, each carrier (CC) has its uplink and downlink bandwidths configured in different widths.

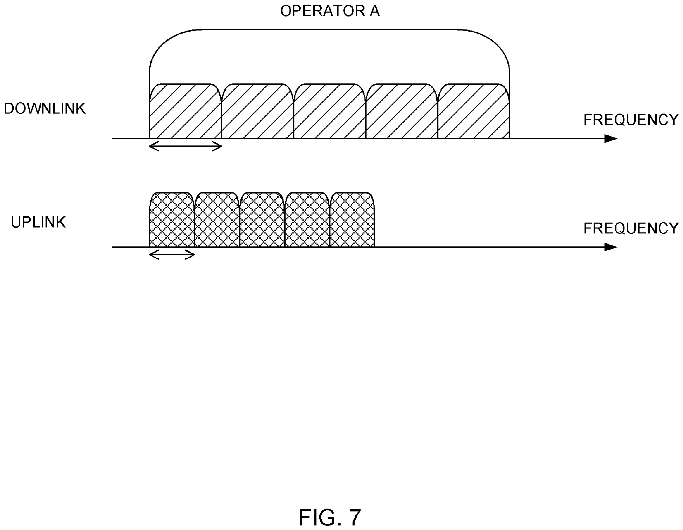

FIG. 7 shows a case where, in each operator (or cell), the bandwidth of CCs for UL communication is configured narrow compared to the bandwidth of CCs for DL communication. In the case shown here, in operator A (or cell A), the number of CCs for DL communication and UL communication is configured to five, and the bandwidth of CCs (at least one CC) for UL communication is configured narrower than the bandwidth of CCs for DL communication. In this case, when a radio base station and a user terminal communicate by switching between DL communication and UL communication dynamically, per TTI or within TTIs, the radio base station and the user terminal can control communication using the same number of CCs in the uplink and the downlink.

As shown in FIG. 7, the bandwidth of carriers (CCs) in CA is configured in different widths between the uplink and the downlink, so that, even when the same number of CCs are configured in the uplink and the downlink, the uplink bandwidth can be configured narrower than the downlink bandwidth.

### <Method 3 of Configuring Asymmetric Bandwidths>

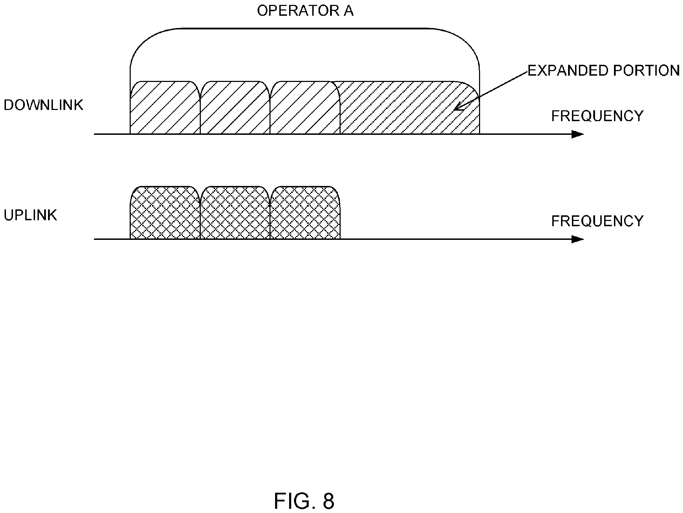

As another example of the method of configuring asymmetric bandwidths, a structure may be adopted here in which part of the downlink carriers is expanded. FIG. 8 shows a case where, in each operator (or cell), the carriers (for example, CCs) to be used in DL communication are partially expanded. Here, in operator A (or cell A), the number of CCs for DL communication and UL communication is configured to three, and the bandwidth of CCs (at least one CC) for DL communication is expanded. In this case, when a radio base station and a user terminal communicate by dynamically switching between DL communication and UL communication per TTI or within TTIs, the radio base station and the user terminal can control DL communication by using the expanded portion of the downlink carriers.

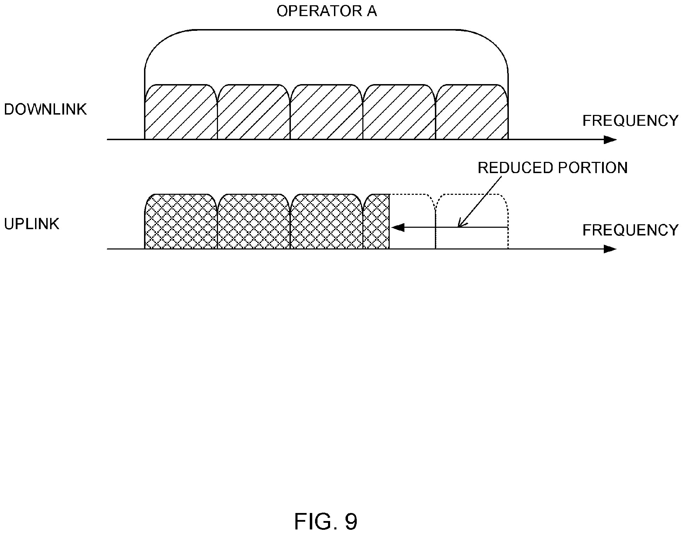

Alternatively, the uplink carriers may be partially scaled down. FIG. 9 shows a case where each operator (or cell) makes part of the carriers (for example, CCs) for UL communication smaller. In the case shown here, in operator A (or cell A), the number of CCs for DL communication and UL communication is configured to five, and the bandwidth of CCs (at least one CC) for UL communication is made smaller. In this case, when a radio base station and a user terminal communicate by dynamically switching between DL communication and UL communication per TTI or within TTIs, the radio base station and the user terminal can control UL communication by using the portion of the uplink carriers that has been made smaller.

### <Signaling Method>

As mentioned earlier, if the UL and DL system bandwidths are configured differently, the radio base station can report information about the bandwidths used for UL communication and/or DL communication to the user terminal. For example, at the radio base station, information about the UL and DL system bandwidths and/or center frequencies can be included in cell-specific information (for example, broadcast information, system information, etc.) and reported to the user terminal. The information about the bandwidths used for UL communication and/or DL communication may be information that specifies the bandwidths, or may be information about the number of CCs configured.

Alternatively, the information about the UL and DL system bandwidths and/or center frequencies may be included in higher layer signaling (for example, RRC signaling) and reported from the radio base station to the user terminal as user-specific (UE-specific) information. The radio base station may report one of information about the UL system bandwidth and/or center frequency and information about the DL system bandwidth and/or center frequency, to the user terminal, or report both of these.

Furthermore, the radio base station may report information about a plurality of bandwidths (candidate bandwidths) used for UL communication and/or DL communication to the user terminal, in advance, by way of higher layer signaling and so on, and designate a predetermined bandwidth by using downlink control information.

In TDD, when the DL bandwidth and the UL bandwidth are configured asymmetrically, cases might occur where, unlike TDD in existing systems, the center frequency is different between DL communication and UL communication. In this case, the radio base station may separately report information about the UL system bandwidth and/or center frequency and information about the DL system bandwidth and/or center frequency, to the user terminal.

The user terminal may report, in advance, information about the maximum UL and DL system bandwidths that can be configured, to the network (radio base station), as network capability information (UE capability). The information on the maximum UL and DL system bandwidths may be, for example, the number of CCs which the user terminal can support. By this means, the radio base station can determine the bandwidths to use in UL communication and/or DL communication, based on the user capability information reported from each user terminal, and control communication by configuring the uplink and downlink (for example, UL) bandwidths narrow.

### (Second Aspect)

Based on a second aspect of the present invention, a case will be described below, where self-contained assignment, in which assignment is performed so that transmission and reception control (scheduling) is complete within TTIs, is employed.

For future radio communication systems, signal assignment (also referred to as "self-contained assignment," "self-contained operation," etc.), in which transmission/receipt control (scheduling, retransmission control, etc.) is completed within TTIs, is under study. TTIs in which this signal assignment is made are also referred to as "self-contained TTIs," "self-contained subframes," "self-contained symbol sets" and so on.

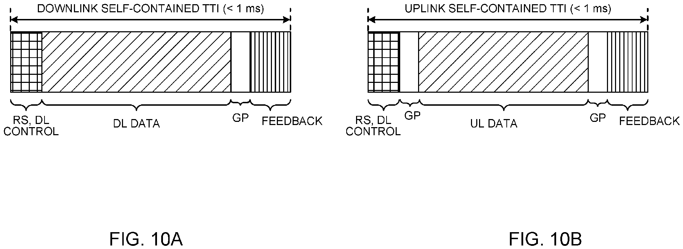

FIGs. 10 provide diagrams to show examples of self-contained TTIs. As shown in FIG. 10A, in a downlink self-contained TTI, a reference signal (RS)/downlink control (DL control) field, to which a reference signal and/or a downlink control signal are mapped, a downlink data (DL data) field, to which a downlink data signal is mapped, and a feedback field, to which delivery acknowledgment information in response to the downlink data signal is mapped, are provided. Between the data field and the feedback field, a guard period may be placed so as to provide time to switch between the downlink and the uplink.

As shown in FIG. 10B, in an uplink self-contained TTI, a reference signal/downlink control field, to which a reference signal and/or a downlink control signal are mapped, an uplink data field, to which an uplink data signal is mapped, and a feedback field, to which delivery acknowledgment information in response to the uplink data signal is mapped, are provided. Between the reference signal/downlink control field and the data field, and between the data field and the feedback field, a guard period may be placed so as to provide time to switch between the downlink and the uplink.

Given that, in existing LTE systems, feedback information (for example, ACK/NACK) in response to downlink/uplink data is transmitted four TTIs after the TTI where the downlink/uplink data was received, the use of the self-contained TTIs shown in FIGs. 10A and 10B makes it possible to shorten the latency due to delayed feedback. In addition, given that, in existing LTE systems, uplink data is transmitted four TTI after the TTI where the downlink control signal was received, the use of the self-contained TTI shown in FIG. 10B makes it possible to shorten the latency due to delayed assignment.

If the structure shown in FIG. 5 is employed in self-contained operation, the system bandwidth and/or the center frequency are different between DL and UL included in the same TTI (or subframe). In this case, the radio base station may dynamically report information about the self-contained UL bandwidth to the user terminal.

For example, the radio base station includes and transmits information about the system bandwidth and/or the center frequency to use in UL transmission (for example, UL data and/or UL control information (for example, HARQ-ACK)) in the DL control channel that is transmitted in the same TTI. The user terminal can determine the parameters of UL transmission based on the information contained in the DL control channel. Note that the radio base station may report the information about the system bandwidth and/or the center frequency to use in UL transmission, to the user terminal, by using the downlink control information in the TTI that is transmitted a predetermined number of TTIs before the TTI for performing the UL transmission.

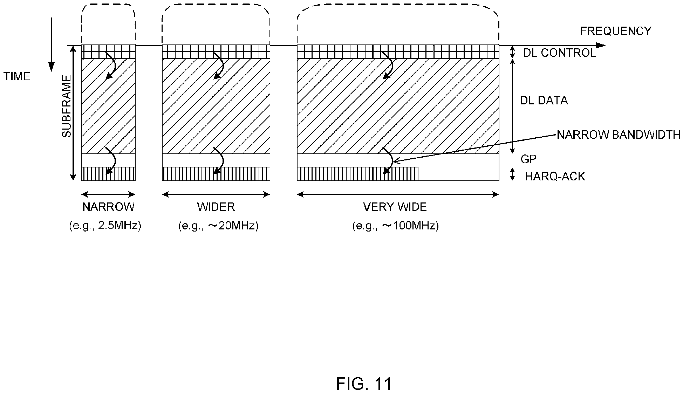

Furthermore, in self-contained UL transmission, the user terminal may control transmission power based on the bandwidth of this UL transmission. For example, the user terminal applies a predetermined transmission power offset according to the bandwidth for UL transmission (see FIG. 11). FIG. 11 shows a case where self-contained assignment (here, assignment of DL data and UL control information) is performed in each of the three bands (including a narrow band, a wider band and a very wide band).

If the UL transmission bandwidth is not configured narrow and is a wide band (for example, the same as the DL bandwidth), the user terminal can apply a transmission power offset that increases the UL transmission power. For example, the user terminal applies a transmission power offset that makes the UL transmission power higher, in the narrow band and the wider band of FIG. 11. As a result, even when the impact of interference on UL communication is heavy, UL transmission can be performed adequately.

Alternatively, if the UL transmission bandwidth is configured narrow (for example, narrower than the DL bandwidth), the frequency field that is configured narrow (the guard band that is configured wide) can reduce the impact of interference between the uplink and the downlink. In this case, the user terminal may apply no transmission power offset, apply a smaller transmission power offset than when the UL transmission bandwidth is wide, or apply a negative transmission power offset. For example, referring to FIG. 11, in the very wide band where the transmission bandwidth for uplink control information is configured narrow, the user terminal controls the UL transmission power by applying no transmission power offset, applying a smaller transmission power offset than when the UL transmission bandwidth is wide, or applying a negative transmission power offset.

Note that the transmission power offset can be determined in advance in association with the UL transmission bandwidth. Alternatively, information about the transmission power offset may be included in the downlink control information that is contained in the same TTI (or the TTI that is transmitted a predetermined number of TTIs earlier), and reported to the user terminal.

Thus, by controlling UL transmission power based on the transmission bandwidth of UL, even when uplink communication and downlink communication overlap between operators (or between cells), it is still possible to configure UL transmission power by taking into account the interference between the uplink and the downlink.

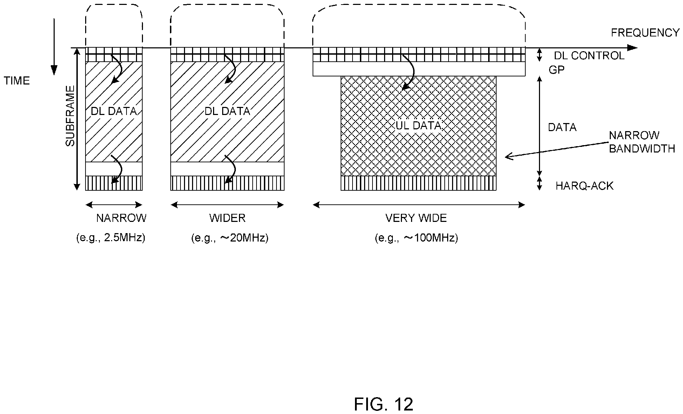

Although a case has been shown with reference to FIG. 11 where DL data is transmitted in each band, the present embodiment is not limited to this. As shown in FIG. 12, UL transmission power control can be applied likewise even when UL data, the transmission bandwidth of which is configured narrow compared with DL, is transmitted.

### (Radio Communication System)

Now, the structure of a radio communication system according to an embodiment of the present invention will be described below. In this radio communication system, communication is performed using one or a combination of the radio communication methods according to the above aspects of the present invention.

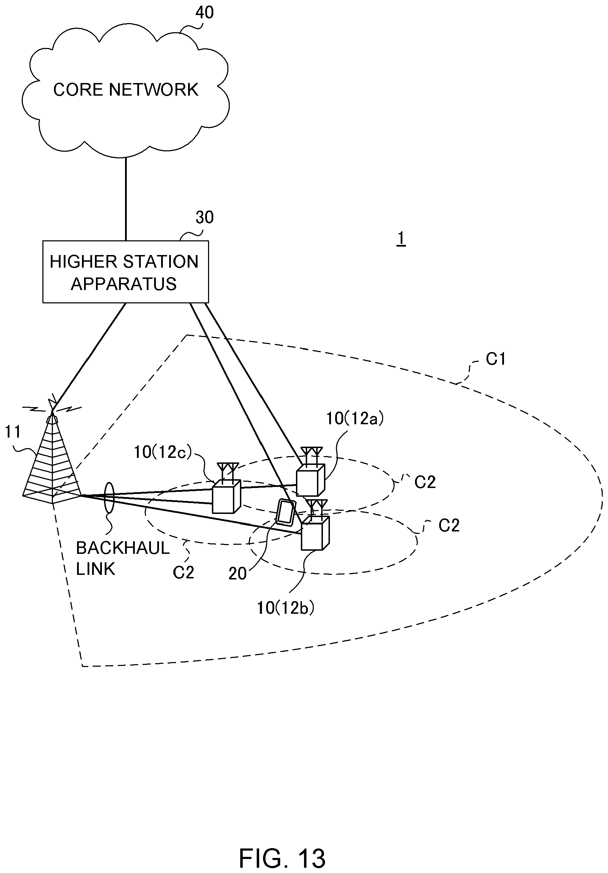

FIG. 13 is a diagram to show an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 shown in FIG. 13 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. Delivery acknowledgment information (also referred to as, for example, "retransmission control information," "HARQ-ACKs," "ACK/NACKs," etc.) of HARQ (Hybrid Automatic Repeat reQuest) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement information and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### <Radio Base Station>

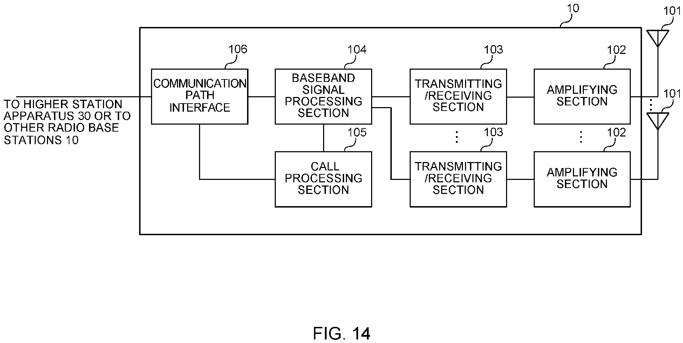

FIG. 14 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 through downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field, in which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit the DL signal to be transmitted to the user terminals (for example, downlink control information, downlink data, etc.). The transmitting/receiving sections 103 can include information that specifies either UL communication (for example, UL data assignment) or DL communication (for example, DL data assignment), in downlink control information, and transmit this to the user terminals.

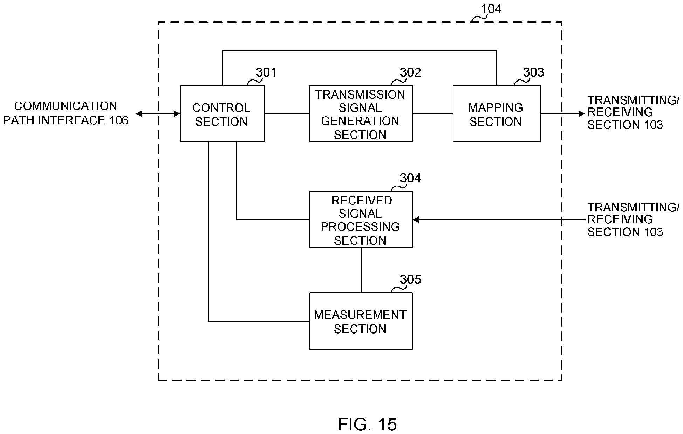

FIG. 15 is a diagram to show an example of a functional structure of a radio base station according to one embodiment of the present invention. Note that, although FIG. 15 primarily shows functional blocks that pertain to characteristic parts of the present embodiment, the radio base station 10 has other functional blocks that are necessary for radio communication as well. As shown in FIG. 15, the baseband signal processing section 104 at least has a control section (scheduler) 301, a transmission signal generation section 302, a mapping section 303, a received signal processing section 304 and a measurement section 305.

The control section (scheduler) 301 controls the whole of the radio base station 10. The control section 301 can be constituted by a controller, a control circuit or control apparatus that can be described based on general understanding of the technical field, in which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals that are transmitted in the PDSCH and downlink control signals that are communicated in the PDCCH and/or the EPDCCH. The control section 301 controls the generation of downlink control signals (for example, delivery acknowledgement information and so on), downlink data signals and so on, based on whether or not retransmission control is necessary, decided in response uplink data signals, and so on. Also, the control section 301 controls the scheduling of downlink reference signals such as synchronization signals (for example, the PSS (Primary Synchronization Signal)/SSS (Secondary Synchronization Signal)), the CRS, the CSI-RS, the DMRS and so on.

In addition, the control section 301 controls the scheduling of uplink data signals that are transmitted in the PUSCH, uplink control signals (for example, delivery acknowledgment information) that are transmitted in the PUCCH and/or the PUSCH, random access preambles that are transmitted in the PRACH, uplink reference signals, and so on.

The control section 301 can control communication by dynamically switching between UL communication and DL communication, per subframe and/or within subframes, and control communication by configuring the frequency bandwidth for use in one of the uplink and the downlink (for example, UL communication) narrower than the other frequency bandwidth (for example, DL communication).

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field, in which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field, in which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field, in which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field, in which the present invention pertains.

The measurement section 305 may measure the received power (for example, the RSRP (Reference Signal Received Power)), the received quality (for example, RSRQ (Reference Signal Received Quality)), channel states and so on of the received signals. The measurement results may be output to the control section 301.

### <User Terminal>

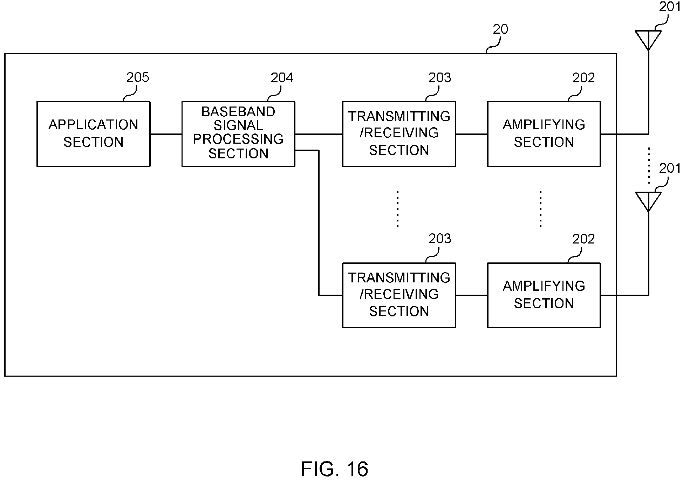

FIG. 16 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field, in which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive DL signals and transmit UL signals. For example, the transmitting/receiving sections 203 receive downlink control information that is transmitted from the radio base station. Also, based on the downlink control information, the transmitting/receiving sections 203 perform transmission and/or reception by dynamically switching between UL communication and DL communication per subframe and/or within subframes, and, using a frequency band that is narrower than the frequency bandwidth for use in one of the uplink and the downlink (for example, DL receipt), performs communication in the other one of the uplink and the downlink (for example, UL transmission).

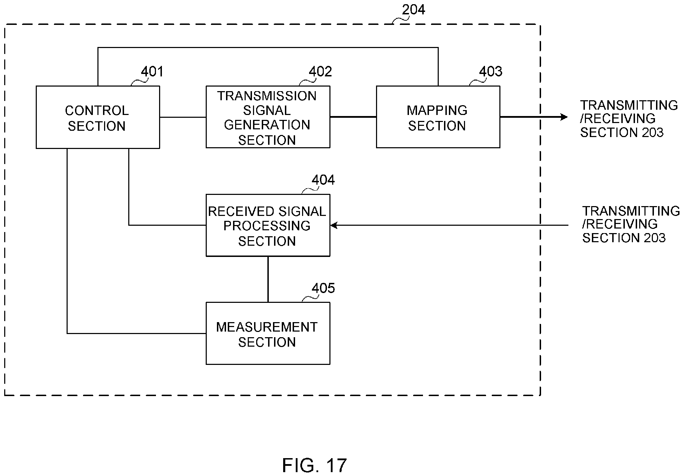

FIG. 17 is a diagram to show an example of a functional structure of a user terminal according to one embodiment of the present invention. Note that, although FIG. 17 primarily shows functional blocks that pertain to characteristic parts of the present embodiment, the user terminal 20 has other functional blocks that are necessary for radio communication as well. As shown in FIG. 17, the baseband signal processing section 204 provided in the user terminal 20 at least has a control section 401, a transmission signal generation section 402, a mapping section 403, a received signal processing section 404 and a decision section 405.

The control section 401 controls the whole of the user terminal 20. For the control section 401, a controller, a control circuit or control apparatus that can be described based on general understanding of the technical field, in which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the decision section 405, and so on.

The control section 401 acquires the downlink control signals (signals transmitted in the PDCCH/EPDCCH) and the downlink data signals (signals transmitted in the PDSCH) transmitted from the radio base station 10, via the received signal processing section 404. The control section 401 controls the generation of uplink control signals (for example, delivery acknowledgement information), uplink data signals and so on, based whether or not retransmission control is necessary, decided in response to the downlink control signals and/or downlink data signals, and so on.

The control section 401 controls communication by dynamically switching between UL communication and DL communication per subframe and/or within subframes, based on downlink control information. For example, the control section 401 exerts control so that, by using a frequency band that is narrower than the frequency bandwidth for use in one of the uplink and the downlink (for example, DL communication), communication is performed in the other one of the uplink and the downlink (for example, UL communication) (see FIG. 5).

Furthermore, the control section 401 can perform UL communication using fewer CCs than the component carriers (CCs) for DL communication (see FIG. 6). Alternatively, the control section 401 can perform UL communication using CCs whose bandwidth is configured narrower than the bandwidth of CCs for DL communication (see FIG. 7). In addition, the control section 401 can perform DL communication using CCs with an expanded bandwidth, and/or perform UL communication using CCs with a reduced bandwidth (see FIG. 8 and FIG. 9).

Furthermore, when communication is performed by switching between UL communication and DL communication within subframes, the control section 401 can control UL transmission power by applying predetermined power offsets to CCs where the UL communication and DL communication bandwidths are different (see FIG. 11 and FIG. 12).

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field, in which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is contained in a downlink control signal that is reported from the radio base station 10, the control section 401 commands the transmission signal generation section 402 to generate uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field, in which the present invention pertains.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401 and the decision section 405. The received signal processing section 404 outputs, for example, broadcast information, system information, RRC signaling, DCI and so on, to the control section 401.

The received signal processing section 404 can be constituted by a signal processor, a signal processing circuit or signal processing apparatus, and a measurer, a measurement circuit or measurement apparatus that can be described based on general understanding of the technical field, in which the present invention pertains. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. When downlink signals (PDSCHs) are transmitted from multiple CCs (for example, six or more CCs), retransmission control decisions (ACKs/NACKs) can be made on a per CC basis, and output to the control section 401. The decision section 405 can be constituted by a decision circuit or decision apparatus that can be described based on general understanding of the technical field pertaining to the present invention.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically coupled, or may be realized by directly and/or indirectly connecting two or more physically and/or logically separate pieces of apparatus (via wire or wireless, for example) and using these multiple pieces of apparatus.

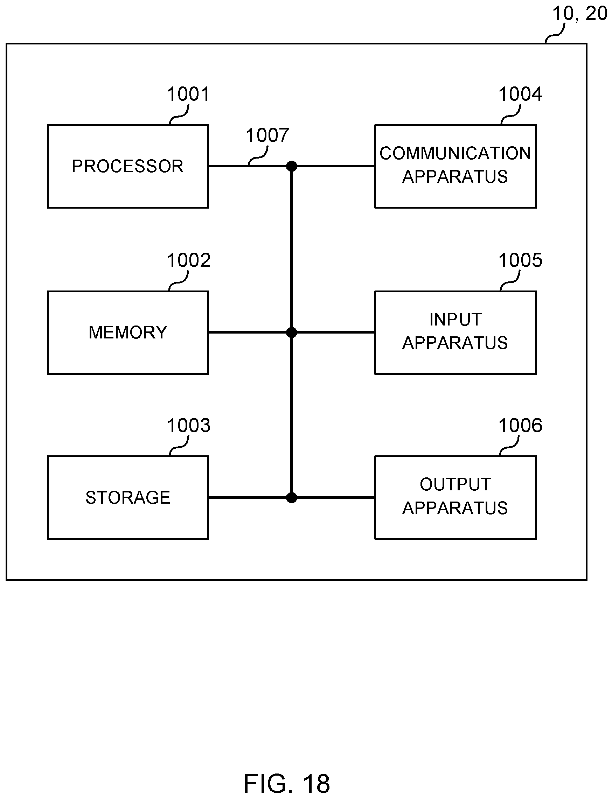

That is, a radio base station, a user terminal and so on according to an embodiment of the present invention may function as a computer that executes the processes of the radio communication method of the present invention. FIG. 18 is a diagram to show an example of a hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication method according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and a TTI may be a subframe (one ms) in existing LTE, may be a shorter period than one ms (for example, one to thirteen symbols), or may be a longer period of time than one ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. TTIs may be transmission time units for channel-encoded data packets (transport blocks), or may be the unit of processing in scheduling, link adaptation and so on.

A TTI having a time duration of one ms may be referred to as a "normal TTI (TTI in LTE Rel. 8 to 12)," a "long TTI," a "normal subframe," a "long subframe," etc. A TTI that is shorter than a normal TTI may be referred to as a "shortened TTI," a "short TTI," a "shortened subframe," a "short subframe," or the like.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB: Physical RB)," a "PRB pair," an "RB pair," or the like.

Furthermore, a resource block may be comprised of one or more resource elements (REs).

For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and cyclic prefix (CP) length can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be stored in a specific location (for example, a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Blocks) and SIBs (System Information Blocks) and so on) and MAC (Medium Access Control) signaling, other signals or combinations of these.

Note that physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, predetermined information (for example, reporting of information to the effect that "X holds") does not necessarily have to be reported explicitly, and can be reported in an implicit manner (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by a base station may, in some cases, be performed by its upper node. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The phrase "based on" as used in this specification does not mean "based only on," unless otherwise specified. In other words, the phrase "based on" means both "based only on" and "based at least on."

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency regions, microwave regions and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-091306, filed on April 28, 2016, including the specification, drawings and abstract, is incorporated herein by reference in its entirety.

## Claims

1. A user terminal comprising:
a receiving section that receives downlink control information; and
a control section that controls communication by switching between UL transmission and DL transmission per subframe and/or within a subframe based on the downlink control information,
wherein the control section performs the UL transmission using a frequency band that is narrower than a frequency band used for the DL transmission.

2. The user terminal according to claim 1, wherein the control section performs the UL transmission using fewer component carriers (CCs) than CCs used for the DL transmission.

3. The user terminal according to claim 1 or claim 2, wherein the control section performs the UL transmission using a CC in which a bandwidth that is narrower than a bandwidth of a CC for the DL transmission is configured.

4. The user terminal according to any one of claims 1 to 3, wherein the control section performs the DL transmission using a CC with an expanded bandwidth, and/or performs the UL transmission using a CC with a reduced bandwidth.

5. The user terminal according to any one of claims 1 to 4, wherein, when communication is performed by switching between the UL transmission and the DL transmission within the subframe, the control section controls UL transmission power by applying a given power offset to a CC where UL transmission and DL transmission bandwidths are different.

6. A radio communication method for a user terminal that communicates using a subframe used for UL transmission and/or DL transmission, the radio communication method comprising:
receiving downlink control information; and
controlling communication by switching between the UL transmission and the DL transmission per subframe and/or within a subframe based on the downlink control information,
wherein the UL transmission is performed by using a frequency band that is narrower than a frequency band used for the DL transmission.
